# EUROPÄISCHE PATENTANMELDUNG

(11) **EP 1 311 053 A2**
(43) Veröffentlichungstag der Anmeldung: **14.05.2003**
(21) Anmeldenummer: 02024728.4
(22) Anmeldetag: 06.11.2002
(51) Int. Cl.: H02K 11/00

(54) **Elektromotor**

(30) Priorität: 07.11.2001 DE 10154673
(71) Anmelder: Bühler Motor GmbH, 90459 Nürnberg (DE)
(72) Erfinder: Salomon, Bernd, 90480 Nürnberg (DE); Frühwald, Bernd, 91459 Markt Erlbach (DE)

(57) **Zusammenfassung**

Die Erfindung betrifft einen Elektromotor, mit einem zumindest ein Lagerschild aufweisendes Gehäuse und einem Träger für zumindest ein elektronisches Bauteil, das mit dem Gehäuse elektrisch verbunden ist und Befestigungsmitteln zur Verbindung des Trägers mit dem Gehäuse. Der Erfindung liegt die Aufgabe zugrunde, einen Elektromotor mit einem Massekontakt anzugeben, bei dem Anschlussinduktivitäten reduziert sind und die Kontaktierung auf einfache Weise ohne zusätzliche Bauteile durchführbar ist. Diese Aufgabe wird erfindungsgemäß dadurch gelöst, dass zumindest ein Befestigungsmittel zur elektrischen Verbindung des elektronischen Bauteils mit dem Gehäuse dient oder dass zumindest ein Gehäusevorsprung durch eine Ausnehmung des Trägers ragt und mit dem elektronischen Bauteil in Kontakt steht. Auf diese Weise ist es möglich, die Kontaktierung des elektronischen Bauteils innerhalb des Gehäuses vorzunehmen, womit kurze Wege und damit geringe Induktivitäten einhergehen. Zusätzliche Bauteile sind für diese Lösung nicht notwendig.

## Beschreibung

Die Erfindung betrifft einen Elektromotor, mit einem zumindest ein Lagerschild aufweisendes Gehäuse und einem Träger für zumindest ein elektronisches Bauteil, das mit dem Gehäuse elektrisch verbunden ist und Befestigungsmitteln zur Verbindung des Trägers mit dem Gehäuse.

Es sind Elektromotoren bekannt, beispielsweise ein Motor mit der Serien-Nr. 13.044 der Firma Bühler Motor GmbH, Nürnberg, bei denen zur elektromagnetischen Entstörung zwei Massekondensatoren (sog. Y-Kondensatoren) über an einem Motorgehäuse des Motors von innen anliegende Kontaktdrähte kontaktiert sind. Diese Kontaktdrähte werden außen am Motor durch Schweißen befestigt. Die Drahtstücke dieses bekannten Massekontaktes für einen Elektromotor weisen jedoch eine so hohe Induktivität auf, dass dadurch die Wirksamkeit der Entstörkondensatoren teilweise zunichte gemacht wird.

Aus dem DE-GM 200 17 093 U1 ist ein Massekontakt bekannt, bei dem ein Kontaktkörper mit einem elastisch verformbaren Kern und einem den Kern umgebenden flexiblen und elektrisch leitenden Mantel vorgesehen ist.

Der Erfindung liegt die Aufgabe zugrunde, einen Elektromotor mit einem Massekontakt anzugeben, bei dem Anschlussinduktivitäten reduziert sind und die Kontaktierung auf einfache Weise ohne zusätzliche Bauteile durchführbar ist.

Diese Aufgabe wird erfindungsgemäß dadurch gelöst, dass zumindest ein Befestigungsmittel zur elektrischen Verbindung des elektronischen Bauteils mit dem Gehäuse dient. Auf diese Weise ist es möglich, die Kontaktierung des elektronischen Bauteils innerhalb des Gehäuses vorzunehmen, womit kurze Wege und damit geringe Induktivitäten einhergehen. Zusätzliche Bauteile sind für diese Lösung nicht notwendig.

In Weiterbildung dieser Lösung ist vorgesehen, dass zumindest ein Befestigungsmittel sowohl zur mechanischen Verbindung des Trägers mit dem Gehäuse, als auch zur elektrischen Verbindung des elektronischen Bauteils mit dem Gehäuse dient. Hierbei ist es möglich beide Verbindungen durch einen Arbeitsgang herzustellen.

Ein Befestigungsmittel kann in Form eines Gehäusevorsprungs durch eine Ausnehmung des Trägers ragen wobei dort eine elektrische Verbindung mit dem elektronischen Bauteil erfolgt. Auf diese Weise ist es nicht erforderlich die Anschlüsse des elektronischen Bauteils abzuwinkeln.

Eine weitere Lösung für die erfindungsgemäße Aufgabe besteht darin, dass zumindest ein Gehäusevorsprungs durch eine Ausnehmung des Trägers ragt und mit dem elektronischen Bauteil in elektrischem Kontakt steht. Auch auf diese Weise kann die Kontaktierung des elektronischen Bauteils innerhalb des Gehäuses mit kurzen Wegen und geringen Induktivitäten vorgenommen werden, ohne zusätzliche Bauteile zu verwenden.

Wird der Gehäusevorsprung als Befestigungsmittel für den Träger verwendet, dann kann die mechanische Befestigung und die elektrische Verbindung in einem Arbeitsgang hergestellt werden.

Um die elektrische Verbindung zwischen dem Bauteil und dem Gehäuse vor Vibrationen und damit vor einer Zerstörung zu schützen, ist es notwendig den Träger auch radial zu befestigen. Die radiale Fixierung und/oder Zentrierung kann durch zumindest ein Befestigungsmittel hergestellt werden. Vorteilhaft ist es drei Befestigungsmittel für diesen Zweck einzusetzen, dabei müssen diese nicht notwendigerweise gleichmäßig um 120° beabstandet sein. Eine alternative Möglichkeit besteht darin, den Träger an seinem Rand im Gehäuse zu befestigen.

Durch Verwendung zumindest eines Befestigungsmittels, sowohl zur mechanischen Verbindung des Trägers mit dem Gehäuse, als auch zur elektrischen Verbindung des elektronischen Bauteils mit dem Gehäuse, ist ein verhältnismäßig einfacher Aufbau eines Gusswerkzeugs möglich.

Es ist zweckmäßig die Befestigungsmittel einstückig mit dem Gehäuse, insbesondere mit dem Lagerschild auszubilden und das Lagerschild vorzugsweise aus Aluminium oder Zink herzustellen, um die elektrische Leitfähigkeit und Kontaktierbarkeit zu gewährleisten.

Es ist ein bedrahtetes elektronisches Bauteil vorgesehen, um einen guten Kontakt zwischen dem elektronischen Bauteil und dem Gehäuse zu erreichen. Die Kontaktierung zwischen dem elektronischen Bauteil und dem Träger kann durch Löten, Schweißen, Klemmen oder Klemmschneiden erfolgen, wobei in jedem Fall auf kurze Leitungswege geachtet werden muss.

Um eine Lagesichere Montage des elektronischen Bauteils auf dem Träger zu gewährleisten ist eine Tasche vorgesehen, die mit dem Grundmaterial einstückig sein sollte. In diese Tasche kann das elektronische Bauteil bereits vor der elektrischen Verbindung mit dem Träger eingelegt werden.

Aus geometrischen und spritztechnischen Gründen ist es günstig die Tasche einseitig offen auszubilden und mit Schlitzen zu versehen, die zur Hindurchführung der Anschlussdrähte des elektrischen Bauteils dienen.

Bei Verwendung eines Trägers aus spritzgusstechnisch verarbeitbarem Material, ist der Träger mit einem Leitblech zu versehen, das aufgenietet, heißverpresst oder durch das Trägermaterial zumindest teilweise umspritzt sein kann, um mit dem Träger eine feste Verbindung einzugehen. Der grundsätzliche Aufbau solcher Träger, die im Prinzip Leiterplatten darstellen, ist freier Stand der Technik. Üblicherweise werden hier beim Stanzen der Leitbleche Stege belassen, die Bereiche mit unterschiedlichem Potential für die Dauer des Herstellprozesses miteinander verbinden. Diese Stege werden nach Befestigung mit dem Träger, oder nach dem Umspritzen durch das Trägermaterial, durchtrennt, um die Funktionsfähigkeit des Bauteils herzustellen.

In der Regel sind es Kondensatoren, die zwischen leitenden Bereichen des Trägers und dem Gehäuse geschaltet werden, um als Teil einer Entstörschutzbeschaltung zu wirken. Ist der Träger eine Bürstentragplatte, dann soll der Kondensator vorzugsweise Funken, die zwischen Schleifbürsten und einem Kommutator entstehen weitgehend löschen. Die Leitungen, die zwischen dem Kondensator und dem Kondensator, sowie zwischen dem Kondensator und dem Gehäuse bestehen, sollen so kurz wie möglich sein, um keine nennenswerte Induktivität herzustellen, die ihrerseits zu Störungen führen kann.

Damit Montagefehler weitgehend ausgeschlossen werden können, kann es sinnvoll sein beide Anschlussdrähte mit jeweils einem Teil des Leitblechs elektrisch und mechanisch zu verbinden. Dabei kann die eine Verbindung lediglich zur Fixierung dienen, damit das Ende des Anschlussdrahtes nicht versehentlich abgebogen werden kann. Dabei kommt es darauf an, dass der elektrische Kontakt des Anschlussdrahtes mit dem Befestigungsmittel zwischen den beiden Verbindungsstellen des elektronischen Bauteils 4 mit dem Leitblech liegt. Es ist hierdurch möglich die Montage zu automatisieren.

Ein wesentlicher Vorteil der Erfindung liegt darin, dass z.B. bei einem Schweißprozess eine sehr viel genauere Positionierung der Schweißpunkte möglich ist. Bei Vorhandensein einer Dichtung, die beim Schweißprozess beschädigt werden könnte, ist es nun nicht mehr notwendig diese zu entfernen oder die Montagereihenfolge entsprechend zu wählen.

Nachfolgend wird die Erfindung anhand eines Ausführungsbeispiels näher erläutert. Es zeigen:
Fig. 1 eine Schnittansicht durch einen Teilbereich eines Gehäuses eines Elektromotors,
Fig. 2 eine Frontansicht eines in ein Lagerschild eingebauten Trägers,
Fig. 3 eine vergrößerte Darstellung eines Ausschnitts des Trägers und
Fig. 4 eine Schnittansicht des Lagerschilds und des Trägers als Bürstentragplatte.

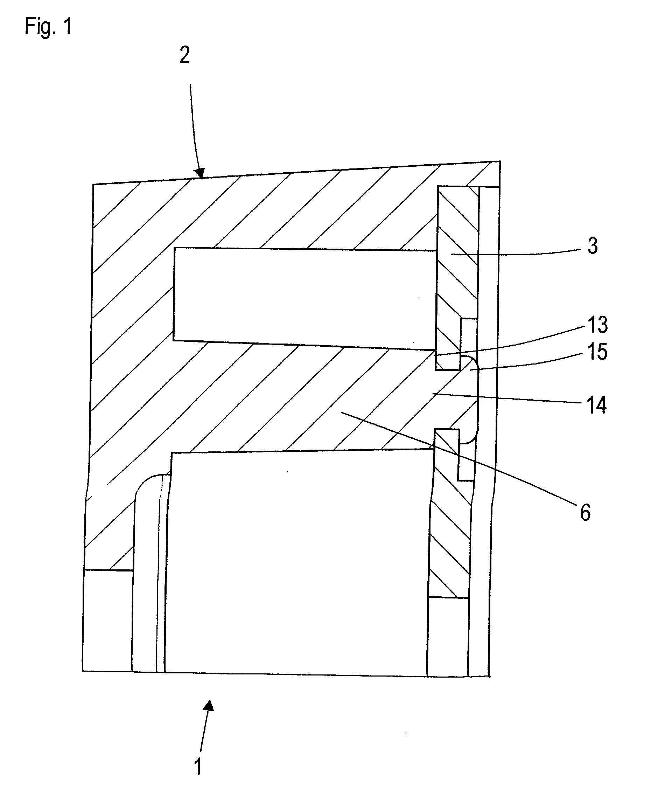

Fig. 1 zeigt eine Schnittansicht durch einen Teilbereich eines Gehäuses 2 eines Elektromotors 1, mit einem Befestigungsmittel 6, der in Form eines Zapfens mit einem Lagerschild 5 einstückig ist. Das Befestigungsmittel 6 dient zur Befestigung eines Trägers 3, welcher elektronische Bauteile trägt (hier nicht explizit dargestellt). Die Verbindung des Befestigungsmittels 6 mit dem Träger 3 wird durch einen Nietprozess hergestellt. Hierzu weist das Befestigungsmittel 6 einen Nietschaft 14 auf, der bis zu einem Absatz 13 als Anschlagmittel für den Träger 3 reicht. Durch Umformen des Schaftendes entsteht ein Nietkopf 15. Alternativ kann auch ein Heißverpressen oder ein Verstemmen stattfinden. Es ist auch denkbar das Material des Trägers zu verformen, um eine innige Verbindung der beiden Bauteile miteinander zu erreichen.

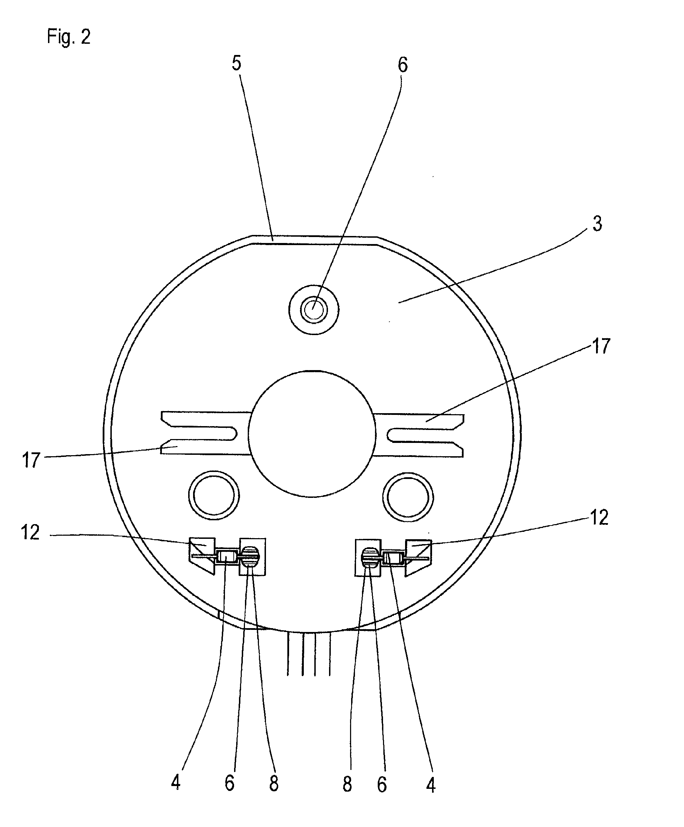

Fig. 2 zeigt eine Frontansicht des im Lagerschild 5 eingebauten Trägers 3, mit zwei elektronischen Bauteilen 4, drei Befestigungsmitteln 6, wobei das in Fig. 2 oben dargestellte Befestigungsmittel 6 nicht zur Kontaktierung von elektronischen Bauteilen verwendet wird, sondern als eine von drei Stützstellen zum Halten des Trägers 3 im Lagerschild 5. Im Träger sind Ausnehmungen 8 vorgesehen, die als Freisparungen für die Befestigungsmittel 6 dienen. Im günstigsten Fall sind die drei Stützstellen in ca. 120°-Abständen um eine Rotationsachse des Elektromotors angeordnet. Als elektronische Bauteile 4 sind hier Kondensatoren vorgesehen, die einerseits mit je einem Befestigungsmittel 6 und andererseits mit einem Leitblech 12 elektrisch verbunden sind.

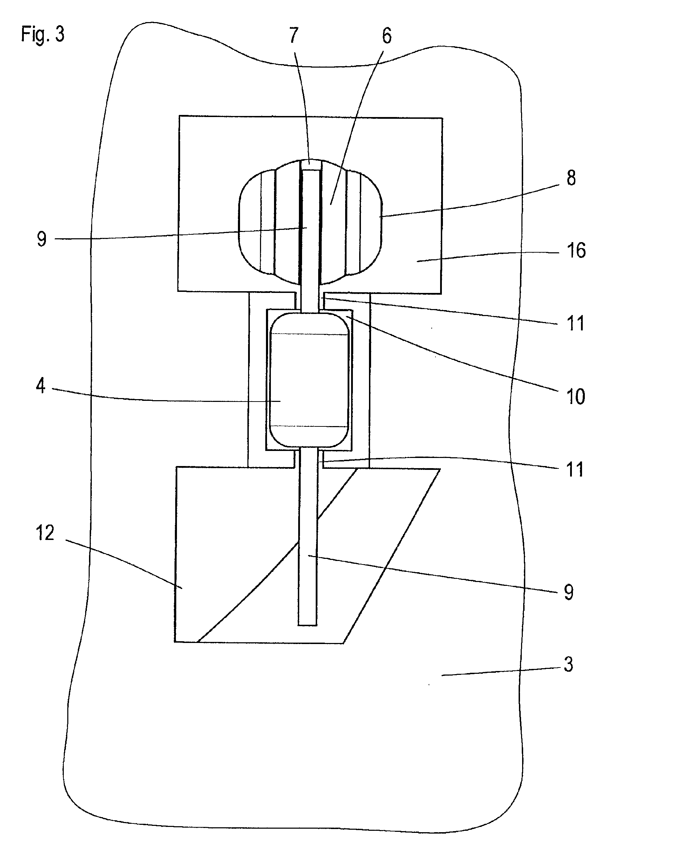

Eine genauere Beschreibung dieses Verbindungsbereichs ist mit Hilfe der Fig. 3 möglich. Hier ist zu erkennen, dass das elektronische Bauteil 4 zwei Anschlussdrähte 9 aufweist, die nicht wie üblich abgewinkelt sind, sondern sich gerade aus dem Bauteil 4 heraus erstrecken. Das elektronische Bauteil 4 ist in einer Tasche 10 eingelegt, die mit Schlitzen 11 als Durchführungen für die Anschlussdrähte 9 versehen ist. Die Tasche 10 selbst ist Bestandteil des Trägers 3, der in einem Spritzverfahren hergestellt ist. Im Anschluss an die Tasche 10 ist das Befestigungsmittel 6 als einstückiger Bestandteil des Lagerschildes angeordnet, in das stimseitige Ende des Befestigungsmittel ist ein Aufnahmeschlitz 7 eingeformt. Dieser Aufnahmeschlitz 7 dient einerseits als Fügehilfe und andererseits als seitliche Abstützung gegen Abdrängen des Anschlussdrahtes 9 bei einem Nietprozess oder einem anderen Verbindungsverfahren. Annähernd die gesamte Länge des Anschlussdrahtes kann bei dieser Ausführung zur Kontaktierung ausgenützt werden. Auch dies ist eine Maßnahme zur Verbesserung der Entstörwirkung. Der gegenüberliegende Anschlussdraht 9 des elektronischen Bauteils 4 kann ebenso großflächig, an diese Stelle mit dem Leitblech 12, elektrisch verbunden werden. Der Träger 3 weist im Bereich um die Befestigungsmittel 6 eine Einsenkung 16 auf. Die Einsenkung 16 dient zur Verlagerung der Kontaktierungsebene, insbesondere bei umspritzten Leitblechen 12 im Träger 3 (Niveauausgleich).

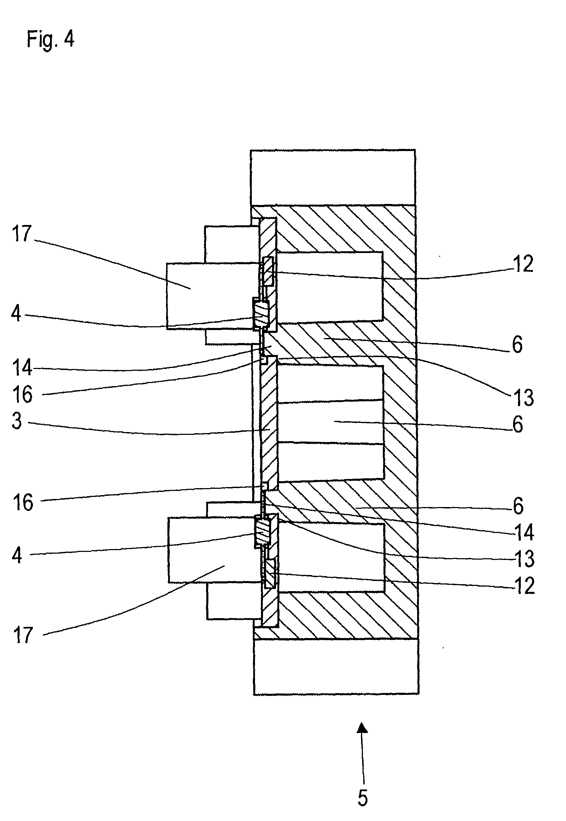

Fig. 4 zeigt eine Schnittansicht des Lagerschilds und des Trägers, wobei die mit dem Lagerschild 5 einstückig ausgebildeten zapfenförmigen Verbindungsmittel 6 deutlich zu erkennen sind. Die Verbindungsmittel 6 können alternativ auch als Dome ausgebildet sein. Am trägerseitigen Ende der Befestigungsmittel 6 sind die Absätze 13 und die Nietschäfte 14 ausgeformt. Neben den elektronischen Bauteilen 4, die zwischen den Befestigungsmitteln 6 und dem Leitblech 12 auf dem Träger 3 angeordnet und kontaktiert sind, sind auch Bürstenführungen 17 zur Aufnahme von Kohlebürsten dargestellt. Das Lagerschild 5 und der Träger 3 werden üblicherweise vormontiert und bilden damit eine Baugruppe.

### Bezugszeichenliste

- 1: Elektromotor
- 2: Gehäuse
- 3: Träger
- 4: elektronisches Bauteil
- 5: Lagerschild
- 6: Befestigungsmittel
- 7: Aufnahmeschlitz
- 8: Ausnehmung
- 9: Anschlussdraht
- 10: Tasche
- 11: Schlitz
- 12: Leitblech
- 13: Absatz
- 14: Nietschaft
- 15: Nietkopf
- 16: Einsenkung
- 17: Bürstenführung

## Patentansprüche

1. Elektromotor (1), mit einem zumindest ein Lagerschild (5) aufweisendes Gehäuse (2) und einem Träger (3) für zumindest ein elektronisches Bauteil (4), das mit dem Gehäuse (2) elektrisch verbunden ist und Befestigungsmitteln (6) zur Verbindung des Trägers (3) mit dem Gehäuse (2), **dadurch gekennzeichnet, dass** zumindest ein Befestigungsmittel (6) zur elektrischen Verbindung des elektronischen Bauteils (4) mit dem Gehäuse (2) dient.

2. Elektromotor nach Anspruch 1, **dadurch gekennzeichnet, dass** zumindest ein Befestigungsmittel (6) sowohl zur mechanischen Verbindung des Trägers (3) mit dem Gehäuse (2), als auch zur elektrischen Verbindung des elektronischen Bauteils (4) mit dem Gehäuse (2) dient.

3. Elektromotor nach Anspruch 1 oder 2, **dadurch gekennzeichnet, dass** zumindest ein Befestigungsmittel (6) in Form eines Gehäusevorsprung durch eine Ausnehmung (8) des Trägers (3) ragt und mit dem elektronischen Bauteil (4) elektrisch verbunden ist.

4. Elektromotor (1), mit einem zumindest ein Lagerschild (5) aufweisendes Gehäuse (2) und einem Träger (3) für zumindest ein elektronisches Bauteil (4), das mit dem Gehäuse (2) elektrisch verbunden ist und Befestigungsmitteln (6) zur Verbindung des Trägers (3) mit dem Gehäuse (2), **dadurch gekennzeichnet, dass** zumindest ein Gehäusevorsprung durch eine Ausnehmung (8) des Trägers (3) ragt und mit dem elektronischen Bauteil (4) in elektrischem Kontakt steht.

5. Elektromotor nach Anspruch 4, **dadurch gekennzeichnet, dass** der Gehäusevorsprung ein Befestigungsmittel (6) ist.

6. Elektromotor nach zumindest einem der vorangehenden Ansprüche, **dadurch gekennzeichnet, dass** der Träger (3) durch zumindest ein Befestigungsmittel (6) radial fixiert und/oder zentriert ist.

7. Elektromotor nach Anspruch 6, **dadurch gekennzeichnet, dass** der Träger (3) durch drei Befestigungsmittel (6) radial fixiert und/oder zentriert ist.

8. Elektromotor nach Anspruch 1 oder 4, **dadurch gekennzeichnet, dass** der Träger (3) mit seinem Rand im Gehäuse (2) fixiert und/oder zentriert ist.

9. Elektromotor nach Anspruch 4, **dadurch gekennzeichnet, dass** zumindest ein Befestigungsmittel (6) sowohl zur mechanischen Verbindung des Trägers (3) mit dem Gehäuse (2), als auch zur elektrischen Verbindung des elektronischen Bauteils (4) mit dem Gehäuse (2) dient.

10. Elektromotor nach zumindest einem der vorangehenden Ansprüche, **dadurch gekennzeichnet, dass** die Befestigungsmittel (6) einstückig mit dem Lagerschild (5) sind und das Lagerschild (5) aus Aluminium oder Zink besteht.

11. Elektromotor nach zumindest einem der vorangehenden Ansprüche, **dadurch gekennzeichnet, dass** das elektronische Bauteil (4) ein bedrahtetes Bauteil ist, wobei ein Anschlussdraht (9) mit dem Träger (3) elektrisch durch Löten, Schweißen, Klemmen oder Klemmschneiden elektrisch verbunden ist.

12. Elektromotor nach zumindest einem der vorangehenden Ansprüche, **dadurch gekennzeichnet, dass** das elektronische Bauteil (4) in einer Tasche (10) aufgenommen ist.

13. Elektromotor nach Anspruch 12, **dadurch gekennzeichnet, dass** die Tasche (10) einseitig offen ist und Schlitze (11) aufweist, die zur Hindurchführung der Anschlussdrähte (9) des elektrischen Bauteils (4) dienen.

14. Elektromotor nach zumindest einem der vorangehenden Ansprüche, **dadurch gekennzeichnet, dass** der Träger (3) aus spritzgusstechnisch verarbeitbarem Kunststoffmaterial besteht, der mit einem Leitblech (12) verbunden ist, wobei das Leitblech aufgenietet, heißverpresst oder umspritzt ist.

15. Elektromotor nach zumindest einem der vorangehenden Ansprüche, **dadurch gekennzeichnet, dass** das elektronische Bauteil (4) ein Kondensator ist.

16. Elektromotor nach zumindest einem der vorangehenden Ansprüche, **dadurch gekennzeichnet, dass** der Träger (3) eine Bürstentragplatte und das elektronische Bauteil (4) Bestandteil einer Entstörschutzbeschaltung ist.

17. Elektromotor nach zumindest einem der vorangehenden Ansprüche, **dadurch gekennzeichnet, dass** beide Anschlussdrähte (9) mit jeweils einem Teil des Leitblechs (12) elektrisch und mechanisch verbunden sind.

18. Elektromotor nach zumindest einem der vorangehenden Ansprüche, **dadurch gekennzeichnet, dass** die elektrische Kontaktierung eines der Anschlussdrähte (9) eines elektronischen Bauteils (4) mit einem Befestigungsmittel (6) zwischen den beiden elektrischen und mechanischen Verbindungsstellen desselben elektronischen Bauteils (4) mit den jeweiligen Teilen des Leitblechs (12) angeordnet erfolgt.

19. Elektromotor nach zumindest einem der vorangehenden Ansprüche, **dadurch gekennzeichnet, dass** zwei elektronische Bauteile (4) vorgesehen sind.
